(19) Europäisches Patentamt
European Patent Office
Office européen des brevets

(11) **EP 2 506 643 A1**

(12) **EUROPEAN PATENT APPLICATION**
published in accordance with Art. 153(4) EPC

(43) Date of publication:
**03.10.2012 Bulletin 2012/40**

(21) Application number: **10832615.8**

(22) Date of filing: **03.11.2010**

(51) Int Cl.:
*H04W 72/04* (2009.01)　　　*H04L 27/26* (2006.01)
*H04L 5/00* (2006.01)　　　*H04W 40/22* (2009.01)
*H04W 84/04* (2009.01)　　　*H04B 7/02* (2006.01)
*H04L 25/02* (2006.01)　　　*H04W 40/12* (2009.01)

(86) International application number:
**PCT/CN2010/078365**

(87) International publication number:
**WO 2011/063708 (03.06.2011 Gazette 2011/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2009　CN 200910246711**

(71) Applicant: **Huawei Technologies Co., Ltd.
Shenzhen, Guangdong 518129 (CN)**

(72) Inventors:
 • **TAO, Meixia
  Shenzhen
  Guangdong 518129 (CN)**
 • **LI, Bin
  Shenzhen
  Guangdong 518129 (CN)**
 • **SHEN, Hui
  Shenzhen
  Guangdong 518129 (CN)**

 • **LUO, Yi
  Shenzhen
  Guangdong 518129 (CN)**
 • **DANG, Wenbing
  Shenzhen
  Guangdong 518129 (CN)**
 • **MU, Hua
  Shenzhen
  Guangdong 518129 (CN)**
 • **WANG, Xiaowei
  Shenzhen
  Guangdong 518129 (CN)**

(74) Representative: **Epping - Hermann - Fischer
Patentanwaltsgesellschaft mbH
Ridlerstrasse 55
80339 München (DE)**

(54) **RESOURCES ALLOCATION METHOD AND APPARATUS OF MULTIPLE RELAYS ORTHOGONAL FREQUENCY DIVISION MULTIPLEXING (OFDM) SYSTEM**

(57)　　A resource allocation method and apparatus of a multi-relay orthogonal frequency division multiplexing system are disclosed. The resource allocation method of a multi-relay orthogonal frequency division multiplexing system includes: obtaining actual channel information; obtaining resource allocation parameters according to a mathematical optimization problem based on the actual channel information, where the resource allocation parameters include at least two of subcarrier power allocation, relay selection and subcarrier pairing, and the mathematical optimization problem is a mathematical optimization problem set for the subcarrier power allocation, relay selection and subcarrier pairing by using an end-to-end transmission rate optimization principle and based on channel information; and transmitting a signal according to the resource allocation parameters. The foregoing technical solutions optimize system performance.

FIG. 4

**Description**

**FIELD OF THE INVENTION**

The present invention relates to the field of wireless network communications technologies, and in particular, to a resource allocation technology in a multi-relay orthogonal frequency division multiplexing system.

**BACKGROUND OF THE INVENTION**

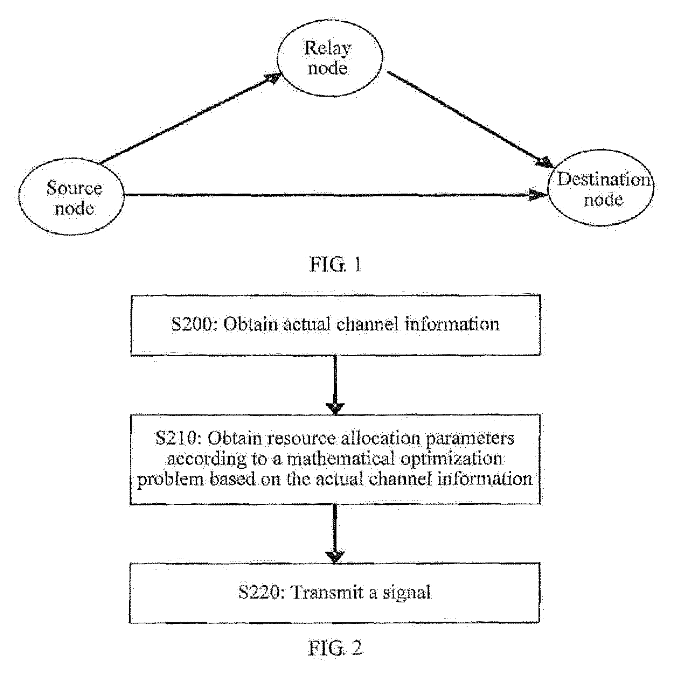

A basic model of a relay network in a wireless communication system is as shown in FIG. 1.

The relay network shown in FIG. 1 includes a source node, a relay node and a destination node. A signal transmission process from the source node to the destination node is completed in two time slots. In the first time slot, the source node broadcasts a signal. The relay node and the destination node monitor the signal sent by the source node. After the signal from the source node is monitored, the relay node first decodes the signal, and sends the decoded signal to the destination node with certain power in the second time slot. The destination node jointly processes the signals respectively received in the first time slot and the second time slot.

A relay-based Orthogonal Frequency Division Multiplexing (orthogonal frequency division multiplexing, OFDM) system adopts a relay technology and an OFDM technology.

In the relay-based OFDM system, exiting resource allocation methods mainly include the following two types.

Method 1 is a resource allocation method based on a same subcarrier principle, that is, a subcarrier through which the source node sends a signal to the relay node is the same as a subcarrier through which the relay node sends a signal to the destination node.

Method 2 is a resource allocation method based on a subcarrier energy pairing principle, that is, a subcarrier with strongest energy in a previous hop is matched with a subcarrier with strongest energy in a later hop, and a subcarrier with second strongest energy in the previous hop is matched with a subcarrier with second strongest energy in the later hop, and the rest can be done in the same manner.

During the process of implementing the present invention, the inventor finds that: Performance of a system based on the existing resource allocation methods can be further optimized.

**SUMMARY OF THE INVENTION**

Embodiments of the present invention provide a resource allocation method and apparatus, which may optimize system performance.

An embodiment of the present invention provides a resource allocation method, including:

obtaining actual channel information;
obtaining resource allocation parameters according to a mathematical optimization problem based on the actual channel information, where the resource allocation parameters include at least two of subcarrier power allocation, relay selection and subcarrier pairing,
where the mathematical optimization problem is a mathematical optimization problem set for the subcarrier power allocation, relay selection and subcarrier pairing by using an end-to-end transmission rate optimization principle and based on channel information; and
transmitting a signal according to the resource allocation parameters.

An embodiment of the present invention provides a resource allocation apparatus, including:

an obtaining module, configured to obtain actual channel information;
a resource allocation module, configured to obtain resource allocation parameters according to a mathematical optimization problem based on the actual channel information, where the resource allocation parameters include at least two of subcarrier power allocation, relay selection and subcarrier pairing,
where the mathematical optimization problem is a mathematical optimization problem set for the subcarrier power allocation, relay selection and subcarrier pairing by using an end-to-end transmission rate optimization principle and based on channel information; and
a transmission module, configured to transmit a signal according to the resource allocation parameters.

It can be known from the description of the foregoing technical solutions that, the mathematical optimization problem is set for the subcarrier power allocation, relay selection and subcarrier pairing by using the end-to-end transmission rate optimization principle, at least two of the subcarrier power allocation, relay selection and subcarrier pairing are obtained by solving the mathematical optimization problem, and the signal is transmitted by using the obtained resource allocation parameters, so as to improve an end-to-end transmission rate, thereby optimizing the system performance.

**BRIEF DESCRIPTION OF THE DRAWINGS**

To illustrate the technical solutions according to the embodiments of the present invention or in the prior art more clearly, accompanying drawings required for describing the embodiments or the prior art are introduced briefly below. Apparently, the accompanying drawings in the following description are merely some embodiments of the present invention, and persons of ordinary skill in the art may further obtain other drawings according to the accompanying drawings without creative efforts.

FIG. 1 is a schematic diagram of a relay network in a wireless communication system;

FIG. 2 is a flow chart of a resource allocation method according to a first embodiment of the present invention;

FIG. 3 is a schematic diagram of an OFDM system to which a resource allocation method according to a second embodiment of the present invention is applicable, where the OFDM system includes a relay network;

FIG. 4 is a flow chart of the resource allocation method according to the second embodiment of the present invention;

FIG. 5 is a flow chart of a resource allocation method according to a third embodiment of the present invention;

FIG. 6 is a flow chart of a resource allocation method according to a fourth embodiment of the present invention;

FIG. 7 is a schematic diagram of a resource allocation apparatus according to a fifth embodiment of the present invention;

FIG. 7A is a first schematic structural diagram of a resource allocation module according to the fifth embodiment of the present invention;

FIG. 7B is a second schematic structural diagram of the resource allocation module according to the fifth embodiment of the present invention;

FIG. 7C is a third schematic structural diagram of the resource allocation module according to the fifth embodiment of the present invention;

FIG. 8 is a schematic diagram of distribution of relay nodes in a simulation process;

FIG. 9 is a first schematic comparison diagram of end-to-end transmission rates obtained through simulation; and

FIG. 10 is a second schematic comparison diagram of end-to-end transmission rates obtained through simulation.

**DETAILED DESCRIPTION OF THE EMBODIMENTS**

The technical solutions in the embodiments of the present invention are clearly and completely described in the following with reference to the accompanying drawings in the embodiments of the present invention. Obviously, the embodiments to be described are part of rather than all of the embodiments of the present invention. All other embodiments obtained by persons of ordinary skill in the art based on the embodiments of the present invention without creative efforts shall fall within the protection scope of the present invention.

Embodiment 1: resource allocation method. A process of the method is as shown in FIG. 2.

In FIG. 2, S200: Obtain actual channel information. Here, the actual channel information may be an equivalent channel gain of each subcarrier.

A process of obtaining the actual channel information may be obtaining a channel coefficient of each subcarrier, and then calculating the equivalent channel gain of each subcarrier by using the channel coefficient of each subcarrier.

S210: Obtain resource allocation parameters according to a mathematical optimization problem based on the actual channel information. Here, the resource allocation parameters include at least two of subcarrier power allocation, relay selection and subcarrier pairing. Here, the mathematical optimization problem is a mathematical optimization problem set for the subcarrier power allocation, relay selection and subcarrier pairing by using an end-to-end transmission rate optimization principle and based on channel information. The end-to-end transmission rate optimization principle may be specifically an end-to-end transmission rate maximization principle. In the following embodiments, that the end-to-end transmission rate optimization principle is specifically the end-to-end transmission rate maximization principle is taken as an example to illustrate the resource allocation method.

The mathematical optimization problem based on the actual channel information is a mathematical optimization problem obtained after the obtained actual channel information is substituted into the mathematical optimization problem. The obtaining the resource allocation parameters according to the mathematical optimization problem based on the actual channel information in S210 is solving the mathematical optimization problem into which the actual channel information is substituted. Because the mathematical optimization problem is set for the subcarrier power allocation, relay selection and subcarrier pairing, at least two of the subcarrier power allocation, relay selection and subcarrier pairing that maximize an end-to-end transmission rate may be obtained from a solution result. In the embodiment, a form of a dual function may be adopted to solve the foregoing mathematical optimization problem, that is, the mathematical optimization problem is converted to the form of a dual function for expression, and the dual function obtained after conversion is solved. Definitely, in this embodiment, other existing manners may also be adopted to solve the mathematical optimization problem, and a specific implementation process for solving the mathematical optimization problem is not limited in the embodiment.

Formulation of the mathematical optimization problem in S210 may be expressed by the following Formula (1):

$$\max_{\{\mathbf{p},\mathbf{t},\rho\}} \sum_{i=1}^{N} \sum_{i'=1}^{N} \sum_{k=1}^{K} \rho_{i,i'} t_{i,i',k} R_{i,i',k} ,$$

$$s.t. \quad \sum_{k=1}^{K} t_{i,i',k} = 1, \ \forall i,i'. \ \sum_{i=1}^{N}\rho_{i,i'} = 1 \ \sum_{i'=1}^{N}\rho_{i,i'} = 1, \ \forall i,i' \qquad \text{Formula}$$

(1)

$$\sum_{i=1}^{N}\sum_{k=1}^{K} p_{i,k,1} \le P_S \ \sum_{i'=1}^{N} p_{i',k,2} \le P_{R,k}, \ \forall k ;$$

In the Formula (1):

$\mathbf{p}$ indicates subcarrier power allocation, and $\mathbf{p} = \{p_{i,k,1}, p_{i',k,2}\}$; $p_{i,k,1}$ is power of a subcarrier i between a source node and a relay node k; $p_{i',k,2}$ indicates power of a subcarrier i' between the relay node k and a destination node;
$\mathbf{t}$ indicates relay selection, and $\mathbf{t} = \{t_{i,i',k}\}$; $t_{i,i',k}$ indicates that the subcarriers i and i' are allocated to the relay node k;
$\rho$ indicates a subcarrier pairing, and $\rho = \{\rho_{i,i'}\}$; and $\rho_{i,i'}$ indicates pairing of the subcarriers i and i';
N is the number of subcarriers of an OFDM symbol, and N is greater than or equal to l; K is the number of relay nodes, and K is greater than or equal to 2;
$R_{i,i',k}$ indicates a transmission rate where the subcarrier i is used from the source node to the relay node k, and the subcarrier i' is used from the relay node k to the destination node under the circumstances of current actual channel information and that $\mathbf{p} = \{p_{i,k,1}, p_{i',k,2}\}$. $R_{i,i',k}$ may also be referred to as end-to-end mutual information of coordinative transmission completed by the relay node *k* on a subcarrier pairing (*i, i'*), and a unit of the end-to-end mutual information may be a Nats/OFDM signal;

*s.t.* indicates constraints of the mathematical optimization problem, where $\sum_{k=1}^{K} t_{i,i',k} = 1, \ \forall i,i'$ a relay selection

constraint, and indicates that the subcarrier i and the subcarrier i' can only be allocated to one relay node;

$\sum_{i=1}^{N}\rho_{i,i'} = 1 \ \sum_{i'=1}^{N}\rho_{i,i'} = 1, \ \forall i,i'$ ,is a subcarrier pairing constraint, and indicates that the subcarrier i can only be paired with the subcarrier i'; $\sum_{i=1}^{N}\sum_{k=1}^{K} p_{i,k,1} \le P_S$ is a source node power constraint, and indicates that a sum of power of all subcarriers from the source node to all relay nodes does not exceed total transmit power of the source

node; $\sum_{i'=1}^{N} p_{i',k,2} \leq P_{R,k}, \quad \forall k$ is a relay node power constraint, and indicates that a sum of power of all subcarriers from the relay node k to the destination node does not exceed total transmit power of the relay node k. $P_s$ is the total transmit power of the source node, and $P_{R,k}$ is the total transmit power of the relay node k.

The foregoing $R_{i,i',k}$ may be further expressed by the following Formula (2):

$$R_{i,i',k} = \frac{1}{2}\ln(1 + \alpha_{i,3}p_{i,k,1} + \frac{\alpha_{i,k,1}p_{i,k,1}\alpha_{i',k,2}p_{i',k,2}}{1 + \alpha_{i,k,1}p_{i,k,1} + \alpha_{i',k,2}p_{i',k,2}})$$ Formula (2)

In the foregoing Formula (2), $p_{i,k,1}$ is power of the subcarrier i from the source node to the relay node k, $p_{i',k,2}$ indicates power of the subcarrier i' from the relay node k to the destination node, $\alpha_{i,3}$ is an equivalent channel gain of the subcarrier i from the source node to the destination node, $\alpha_{i,k,1}$ is an equivalent channel gain of the subcarrier i from the source node to the relay node k, and $\alpha_{i',k,2}$ is an equivalent channel gain of the subcarrier i' from the relay node k to the destination node. Further, the foregoing $\alpha_{i,3}$ may be expressed as $\alpha_{i,3} = \left|h_{i,3}\right|^2 / \sigma_D^2$. The foregoing $\alpha_{i,k,1}$ may be expressed as $\alpha_{i,k,1} = \left|h_{i,k,1}\right|^2 / \sigma_{R,k}^2$. The foregoing $\alpha_{i',k,2}$ may be expressed as $\alpha_{i',k,2} = \left|h_{i',k,2}\right|^2 / \sigma_D^2$. $h_{i,3}$ is a channel coefficient of the subcarrier i from the source node to the destination node, $h_{i,k,1}$ is a channel coefficient of the subcarrier i from the source node to the relay node k, $h_{i',k,2}$ is a channel coefficient of the subcarrier i' from the relay node k to the destination node, $\sigma_D^2$ is a noise variance of the destination node, and $\sigma_{R,k}^2$ is a noise variance of the relay node k.

It can be known from the foregoing Formula (2) that, for $p_{i,k,1}$ and $p_{i',k,2}$, $R_{i,i',k}$ is not a concave function at the same time. Because a relay node usually amplifies and forwards a signal in a region of a high signal-to-noise ratio, the foregoing Formula (2) may be approximate to the following Formula (3):

$$R_{i,i',k} \approx \frac{1}{2}\ln(1 + \alpha_{i,3}p_{i,k,1} + \frac{\alpha_{i,k,1}p_{i,k,1}\alpha_{i',k,2}p_{i',k,2}}{\alpha_{i,k,1}p_{i,k,1} + \alpha_{i',k,2}p_{i',k,2}})$$ Formula (3)

At present, existing documents have proved that, even if the relay node amplifies and forwards a signal in a region of a low signal-to-noise ratio, a transmission rate obtained through the foregoing Formula (3) is basically very close to optimal capacity, namely, a maximum transmission rate. It may be known from this that, the mathematical optimization problem in this embodiment is a mathematical optimization problem for jointly optimizing the subcarrier pairing, relay selection and subcarrier power allocation, and an optimization objective of the mathematical optimization problem includes maximizing the end-to-end transmission rate under the circumstances that power of each sending node is independently limited.

If the foregoing mathematical optimization problem is solved by adopting the form of a dual function, a dual function $g(\beta)$ obtained by converting the mathematical optimization problem described in the foregoing Formula (1) is:

$$g(\beta) = \max_{\substack{\mathbf{p}\in P\ (\boldsymbol{\rho},\mathbf{t})\\ \{\boldsymbol{\rho},\mathbf{t}\}\in D}} L(\mathbf{p},\mathbf{t},\boldsymbol{\rho},\beta)$$

Formula (4)

In the foregoing Formula (4), $\beta$ is a dual variable of the dual function; $P$ is a range of the subcarrier power allocation, and each value in the range is a function about $\rho$ and $\mathbf{t}$ ; $D$ is a range formed by $\rho$ and $\mathbf{t}$ ; $\mathbf{p}$ is a subcarrier power allocation original variable; $\mathbf{t}$ is a relay selection original variable; $\rho$ is a subcarrier pairing original variable; $\beta$ is a dual variable vector related to the source node power constraint and relay node power constraint, and $\beta = (\beta_S, \beta_{R,1},...,\beta_{R,k}) \pm 0$, where $\beta_S$ is a dual variable vector of the source node, $\beta_{R,1}$ is a dual variable vector of a relay node 1, $\beta_{R,k}$ is a dual variable vector of the relay node k, and $L(\mathbf{p}, \mathbf{t}, \rho, \beta)$ is a Lagrangian function about $\mathbf{p}, \mathbf{t}, \rho$ and $\beta$.

The foregoing Lagrangian function may be specifically expressed as the following Formula (5):

$$L(\mathbf{p},\mathbf{t},\boldsymbol{\rho},\beta) = \sum_{i=1}^{N}\sum_{i'=1}^{N}\sum_{k=1}^{K}\ln(1 + \alpha_{i,3}p_{i,k,1} + \frac{\alpha_{i,k,1}p_{i,k,1}\alpha_{i',k,2}p_{i',k,2}}{\alpha_{i,k,1}p_{i,k,1} + \alpha_{i',k,2}p_{i',k,2}})$$
$$+ \beta_S(P_S - \sum_{i=1}^{N}\sum_{k=1}^{K}p_{i,k,1}) + \sum_{k=1}^{K}\beta_{R,k}(P_{R,k} - \sum_{i'=1}^{N}p_{i',k,2})$$

Formula (5)

Under the circumstances that the Lagrangian function is expressed as the foregoing Formula (5), the dual function $g(\beta)$ in the foregoing Formula (4) may be converted to the following Formula (6):

$$g(\beta) = \max_{\substack{\mathbf{p}\in P\ (\boldsymbol{\rho},\mathbf{t})\\ \{\boldsymbol{\rho},\mathbf{t}\}\in D}} \sum_{i=1}^{N}\sum_{i'=1}^{N}\sum_{k=1}^{K}L_{i,i',k} + \beta_S P_S + \sum_{k=1}^{K}\beta_{R,k}P_{R,k}$$

Formula (6)

where

$$L_{i,i',k} = \ln(1 + \alpha_{i,3}p_{i,k,1} + \frac{\alpha_{i,k,1}p_{i,k,1}\alpha_{i',k,2}p_{i',k,2}}{\alpha_{i,k,1}p_{i,k,1} + \alpha_{i',k,2}p_{i',k,2}}) - \beta_S p_{i,k,1} - \beta_{R,k}p_{i',k,2}$$
.

A process of solving the dual function may be: determining a dual variable value of the dual function, and then calculating an optimal original variable of the dual function on the dual variable value. The obtained optimal original variable is a result of solving the mathematical optimization problem. Here, the dual variable value may be an optimal dual variable value, namely, an optimal dual variable, and may also be an initial dual variable value. The initial dual variable value is a value for initializing the dual variable.

A first specific example of an implementation process of obtaining the resource allocation parameters according to the mathematical optimization problem based on the actual channel information in S210 may be: First, under the circumstances of given subcarrier pairing and given relay selection, optimal subcarrier power allocation is obtained from the mathematical optimization problem based on the actual channel information; because the mathematical optimization problem in this embodiment is set for the subcarrier power allocation, subcarrier pairing and relay selection, under the circumstances of two given resource allocation parameters, an optimal value of a third resource allocation parameter may be obtained from the mathematical optimization problem; then, under the circumstances of the given subcarrier pairing and the foregoing obtained optimal subcarrier power allocation, optimal relay selection is obtained from the mathematical optimization problem based on the actual channel information; after that, under the circumstances of the foregoing obtained optimal subcarrier power allocation and the optimal relay selection, optimal subcarrier pairing is obtained from the mathematical optimization problem based on the actual channel information, for example, the optimal subcarrier pairing is obtained by using a Hungarian algorithm. The foregoing given subcarrier pairing and given relay selection may be set by adopting manners such as initialization or random allocation. A specific setting manner of the given subcarrier pairing and given relay selection are not limited in this embodiment.

If the mathematical optimization problem in this embodiment is expressed in the form of a dual function, the optimal subcarrier pairing, optimal relay selection and optimal subcarrier power allocation that are in the foregoing first specific example are optimal original variables of the dual function on a current value of the dual variable. The current value of the dual variable may be an initialized value of the dual variable, and may also be an optimal dual variable.

If the dual variable in the foregoing first specific example is the initialized value of the dual variable, the foregoing first specific example may further optionally include: judging whether a dual variable of a dual function based on the foregoing optimal subcarrier pairing, optimal relay selection and optimal subcarrier power allocation is converged; if not converged, updating the dual variable, for example, updating the dual variable according to a gradient algorithm or a sub-gradient algorithm; then, based on the updated dual variable, reobtaining the optimal subcarrier pairing, optimal relay selection and optimal subcarrier power allocation, until the dual variable is converged. That is to say, when it is judged that the dual variable is converged, the currently obtained optimal original variables (namely, the optimal subcarrier pairing, optimal relay selection and optimal subcarrier power allocation) are a solution to the mathematical optimization problem. A converged dual variable is the optimal dual variable of the dual function.

In addition, after it is judged that the dual variable is converged, the foregoing first specific example may further optionally include: modifying the optimal subcarrier power allocation by using the optimal relay selection and optimal subcarrier pairing. That is to say, if a duality gap is ignored during a calculation process of the optimal original variables of the first specific example, after the optimal original variables of the dual function on the optimal dual variable are obtained, an optimal subcarrier power allocation original variable may be modified by using an optimal relay selection original variable and optimal subcarrier pairing original variable that are in the calculated optimal original variables, so as to ensure that the subcarrier power allocation is more accurate.

Complexity of the foregoing first specific example is a polynomial of the number of subcarriers in a hop and the number of relay nodes.

A second specific example of the implementation process of obtaining the resource allocation parameters according to the mathematical optimization problem based on the actual channel information in S210 may be: First, under the circumstances that it is known that the subcarrier power is allocated equally and the subcarrier pairing is given, optimal relay selection is obtained from the mathematical optimization problem based on the actual channel information. Equal subcarrier power allocation is that, for a sending node, power of each subcarrier is the same. Because the mathematical optimization problem in this embodiment is set for three of the subcarrier power allocation, subcarrier pairing and relay selection, under the circumstances that it is known that the subcarrier power is allocated equally and one resource allocation parameter is given, an optimal value of a third resource allocation parameter may be obtained from the mathematical optimization problem. After that, under the circumstances of the equal subcarrier power allocation and optimal relay selection, optimal subcarrier pairing may be obtained from the mathematical optimization problem based on the actual channel information. The foregoing given subcarrier pairing may be set by adopting manners such as initialization or random allocation. A specific setting manner of the given subcarrier pairing is not limited in this embodiment.

If the mathematical optimization problem in this embodiment is expressed in the form of a dual function, the optimal subcarrier pairing, optimal relay selection and equal subcarrier power allocation that are in the foregoing second specific example are optimal original variables of the dual function on a current value of the dual variable. The current value of the dual variable may be an initialized value of the dual variable.

The foregoing second specific example is actually jointly optimizing the relay selection and subcarrier pairing based on preset equal subcarrier power allocation. Because an iteration process of the dual variable may not be performed in the foregoing second specific example, complexity of the second specific example is far lower than that of the first specific example.

A third specific example of the implementation process of obtaining the resource allocation parameters according to the mathematical optimization problem based on the actual channel information in S210 may be: First, under the circumstances of known subcarrier pairing and given relay selection, optimal subcarrier power allocation is obtained from the mathematical optimization problem based on the actual channel information. Because the mathematical optimization problem in this embodiment is set for three of the subcarrier power allocation, subcarrier pairing and relay selection, under the circumstances of the known subcarrier pairing and one given resource allocation parameter, an optimal value of the third resource allocation parameter may be obtained from the mathematical optimization problem. After that, under the circumstances of the known subcarrier pairing and the optimal subcarrier power allocation, optimal relay selection may be obtained from the mathematical optimization problem based on the actual channel information. The foregoing given relay selection may be set by adopting manners such as initialization or random allocation. A specific setting manner of the given relay selection is not limited in this embodiment.

If the mathematical optimization problem in this embodiment is expressed in the form of a dual function, the optimal relay selection and optimal subcarrier power allocation in the foregoing third specific example are optimal original variables of the dual function on a current value of the dual variable. The current value of the dual variable may be an initialized value of the dual variable, and may also be an optimal dual variable.

If the dual variable in the foregoing third specific example is the initialized value of the dual variable, the foregoing third specific example may further optionally include: judging whether a dual variable of a dual function based on the foregoing known subcarrier pairing, optimal relay selection and optimal subcarrier power allocation is converged; if not converged, updating the dual variable, for example, updating the dual variable according to a gradient algorithm or a sub-gradient algorithm; then, based on the updated dual variable, reobtaining the optimal relay selection and optimal subcarrier power allocation, until the dual variable is converged. That is to say, when it is judged that the dual variable is converged, the currently obtained optimal original variables (namely, the optimal relay selection and optimal subcarrier power allocation) are a solution to the mathematical optimization problem. The converged dual variable is the optimal dual variable of the dual function.

In addition, after it is judged that the dual variable is converged, the foregoing third specific example may further optionally include: modifying the optimal subcarrier power allocation by using the optimal relay selection and known subcarrier pairing. That is to say, if a duality gap is ignored during a calculation process of the optimal original variables of the third specific example, after the optimal original variables of the dual function on the optimal dual variable are obtained, an optimal subcarrier power allocation original variable may be modified by using an optimal relay selection original variable in the calculated optimal original variables and a known subcarrier pairing original variable, so as to ensure that the subcarrier power allocation is more accurate.

The foregoing third specific example is actually jointly optimizing the relay selection and subcarrier power allocation based on preset fixed subcarrier pairing. Because the subcarrier pairing in the original variables is known in the foregoing third specific example, a process of obtaining the subcarrier pairing is saved. Therefore, complexity of the third specific example is slightly lower than that of the first specific example.

S220: After obtaining a solution result of the mathematical optimization problem, transmit a signal by using the solution result. For example, a signal is transmitted according to the optimal subcarrier pairing, optimal relay selection and optimal subcarrier power allocation; for another example, a signal is transmitted according to the optimal subcarrier pairing, optimal relay selection and equal subcarrier power allocation; for another example, a signal is transmitted according to the known subcarrier pairing, optimal relay selection and optimal subcarrier power allocation.

In S220, signal transmission may be implemented by using the resource allocation parameters obtained through solution and based on an existing signal transmission operation, and a specific implementation process of signal transmission by using the resource allocation parameters is not limited in this embodiment.

An execution subject of the foregoing first embodiment may be a source node, and may also be a relay node.

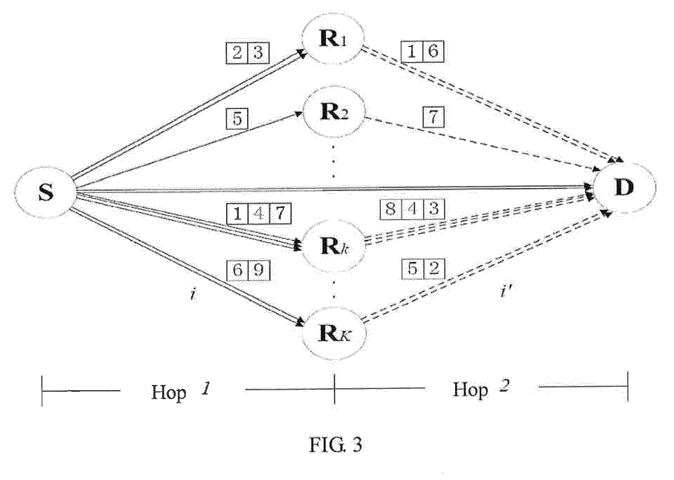

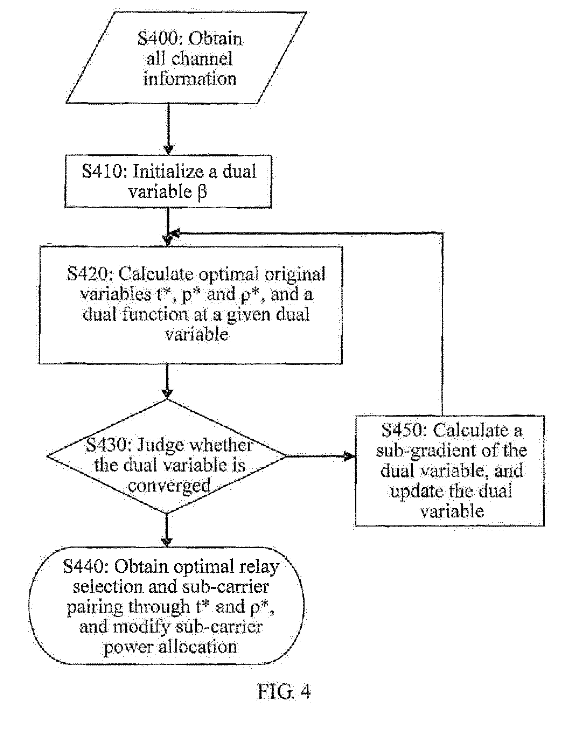

Embodiment 2: resource allocation method. An OFDM system to which the method is applicable is as shown in FIG. 3, where the OFDM system includes a relay network. A process of the method is as shown in FIG. 4.

FIG. 3 shows an OFDM system of two-hop multi-relay coordination, where the OFDM system is based on an amplify-and-forward (AF) protocol. The OFDM system includes: a source node S, $K$ relay nodes, namely, $R_1$ to $R_K$, and a destination node D. The source node S performs OFDM-based communication with the destination node D through the $K$ relay nodes.

In FIG. 3, $K$ channels exist between the source node S and the $K$ relay nodes. A channel exists between the source node S and the destination node D. $K$ channels exist between the $K$ relay nodes and the destination node D. Therefore, in FIG. 3, $(2K + 1)$ channels are included. Bandwidths of the $(2K + 1)$ channels may be set to be the same, and each channel undergoes independent frequency selective fading. Each channel is logically divided into $N$ parallel orthogonal subcarriers, and each subcarrier undergoes flat fading. A subcarrier from the source node S to each relay node is a first-hop subcarrier, and a subcarrier from each relay node to the destination node is a second-hop subcarrier.

Each relay node in FIG. 3 operates in a half duplex mode, and adopts the AF protocol. Communication between the source node S and the destination node D are divided into several frames, where each frame is formed by several OFDM symbols, and each frame is further divided into two time slots. In a first time slot, the source node S sends signals on all subcarriers. The destination node D and all the relay nodes monitor the channels. In a second time slot, each relay node amplifies the monitored signals that are received from each subcarrier, and forwards the amplified signals to the destination node D. For example, a relay node $K$ receives, on a first-hop subcarrier $i$, a signal sent by the source node S. The relay node $K$ amplifies the signal, and sends the amplified signal to the destination node D on a second-hop subcarrier $i'$ in the second time slot. Here, the first-hop subcarrier $i$ and the second-hop subcarrier $i'$ may be the same, and may also be different. The first-hop subcarrier $i$ and the second-hop subcarrier $i'$ form a subcarrier pairing $(i, i')$. To avoid interference among the relay nodes, each subcarrier pairing can only be allocated to one relay node, while multiple subcarrier pairings may be allocated to one relay node. In an extreme case that only one relay node exists, all the subcarrier pairings are allocated to the relay node. At the end of each frame, the destination node combines signals received in the two time slots, and performs optimal detection, so as to obtain frames sent by the source node S.

As shown in FIG. 3, subcarrier pairings allocated to a relay node $R_1$ are (first-hop subcarrier 2, second-hop subcarrier 1) and (first-hop subcarrier 3, second-hop subcarrier 6), a subcarrier pairing allocated to a relay node $R_2$ is (first-hop subcarrier 5, second-hop subcarrier 7), subcarrier pairings allocated to a relay node $R_k$ are (first-hop subcarrier 1, second-hop subcarrier 8), (first-hop subcarrier 4, second-hop subcarrier 4) and (first-hop subcarrier 7, second-hop subcarrier 3), and subcarrier pairings allocated to relay node $R_K$ are (first-hop subcarrier 6, second-hop subcarrier 5) and (first-hop subcarrier 9, second-hop subcarrier 2).

In FIG. 4, S400: Obtain actual channel information, that is, obtain channel information of all subcarriers.

The channel information obtained in S400 is an equivalent channel gain of each subcarrier, where the equivalent channel gain of each subcarrier is obtained through channel coefficient calculation. The equivalent channel gain of each subcarrier may include: an equivalent channel gain of a subcarrier i between the source node S and the relay node k, namely, an equivalent channel gain $\alpha_{i,k,1}$ of the first-hop subcarrier i, an equivalent channel gain of a subcarrier i between the relay node k and the destination node D, namely, an equivalent channel gain $\alpha_{i,k,2}$ of the second-hop subcarrier i, and an equivalent channel gain $\alpha_{i,3}$ of a subcarrier i directly connected between the source node S and the destination node D without any relay node.

The foregoing equivalent channel gains may be defined as $\alpha_{i,k,1} = \left| h_{i,k,1} \right|^2 / \sigma_{R,k}^2$,

$\alpha_{i,k,2} = \left| h_{i,k,2} \right|^2 / \sigma_D^2$ and $\alpha_{i,3} = \left| h_{i,3} \right|^2 / \sigma_D^2$. $h_{i,k,1}$ $h_{i,k,1}$ is a channel coefficient of the first-hop subcarrier *i* of the relay node *k*; $h_{i,k,2}$ is a channel coefficient of the second-hop subcarrier *i* of the relay node *k*; $h_{i,3}$ is a channel coefficient of the subcarrier *i* directly connected between the source node S and the destination node D without any relay node. *i* $\in \{1,..., N\}$, where N is the number of subcarriers from the source node to all relay nodes. $\sigma_{R,k}^2$ is a noise variance of a *k*th relay node, and $\sigma_D^2$ is a noise variance of the destination node. $k \in \{1,..., K\}$, where *K* is the number of relay nodes.

A dual function in S400 is obtained according to a mathematical optimization problem, where the mathematical optimization problem is described as: how to set subcarrier power allocation, relay selection and subcarrier pairing to maximize a transmission rate between the source node and the destination node.

Constraints of the foregoing mathematical optimization problem include: a relay selection constraint, a subcarrier pairing constraint, a source node power constraint and a relay node power constraint. The relay selection constraint is that one pair of subcarriers can only be allocated to one relay node. The subcarrier pairing constraint is that one first-hop subcarrier can only be paired with one second-hop subcarrier. The source node power constraint is that a sum of transmit power of all first-hop subcarriers does not exceed total transmit power of the source node. The relay node power constraint is that a sum of transmit power of all second-hop subcarriers on a relay node does not exceed total transmit power of the relay node.

If the mathematical optimization problem constraints are expressed by a formula, the mathematical optimization problem constraints may be expressed by the following Formula (7) to Formula (10):

$$\text{relay selection constraint: } \sum_{k=1}^{K} t_{i,i',k} = 1, \ \forall i,i'. \quad \text{Formula (7)}$$

K is the number of relay nodes; $t_{i,i',k} \in \{0,1\}$, and $t_{i,i',k}$ may be a binary variable; $t_{i,i',k} = 1$ indicates that a subcarrier pairing $(i,i')$ is allocated to the relay node *k*; $t_{i,i',k} = 0$ indicates that the subcarrier pairing $(i,i')$ is not allocated to the relay node *k*.

$$\text{subcarrier pairing constraint: } \sum_{i=1}^{N} \rho_{i,i'} = 1, \ \sum_{i'=1}^{N} \rho_{i,i'} = 1, \ \forall i,i' \quad \text{Formula (8)}$$

N is the number of first-hop subcarriers, and is also the number of second-hop subcarriers; $\rho_{i,i'} \in \{0,1\}$, and $\rho_{i,i'}$ may be a binary variable; $\rho_{i,i'} = 1$ indicates that the first-hop subcarrier *i* is paired with the second-hop subcarrier *i'*; $\rho_{i,i'} = 0$ indicates that the first-hop subcarrier *i* is not paired with the second-hop subcarrier *i'*.

$$\text{source node power constraint:} \quad \sum_{i=1}^{N} \sum_{k=1}^{K} p_{i,k,1} \leq P_S \qquad \text{Formula (9)}$$

N is the number of first-hop subcarriers of the relay node k, K is the number of relay nodes, $p_{i,k,1}$ is power for transmitting the subcarrier i by the source node to the relay node k, and $P_S$ is total transmit power of the source node.

$$\text{relay node power constraint:} \quad \sum_{i'=1}^{N} p_{i',k,2} \leq P_{R,k}, \quad \forall k \qquad \text{Formula (10)}$$

N is the number of second-hop subcarriers of the relay node k, and the number of first-hop subcarriers of the relay node k is the same as that of second-hop subcarriers of the relay node k; $p_{i',k,2}$ is power for transmitting the second-hop subcarrier i' paired with the first-hop subcarrier i to the relay node k by the source node; $P_S$ is total transmit power of the source node.

A formula for expressing the mathematical optimization problem in S400 may be as shown in the foregoing Formula (1), and is not repeatedly described here. Variables that need to be optimized in the mathematical optimization problem in this embodiment include: subcarrier power allocation **p** = $\{p_{i,k,1}, p_{i',k,2}\}$, relay selection **t** = $\{t_{i,i',k}\}$, and subcarrier pairing $\rho = \{\rho_{i,i'}\}$. The subcarrier power allocation **p** needs to satisfy the Formula (9) and Formula (10). The relay selection **t** needs the Formula (7). The subcarrier pairing $\rho$ needs to satisfy the Formula (8).

The mathematical optimization problem in this embodiment is a mixed integer nonlinear programming problem. The mathematical optimization problem in this embodiment satisfies a time division condition, and the foregoing mathematical optimization problem may be solved through a dual method, so as to obtain **p** = $\{p_{i,k,1}, p_{i',k,2}\}$, **t** = $\{t_{i,i',k}\}$ and $\rho$ = $\{\rho_{i,i'}\}$ that can maximize the transmission rate.

Formulas for expressing the dual function in S400 may be as shown in the foregoing Formula (4), Formula (5) and Formula (6), and are not repeatedly described here.

A dual optimization problem of the dual function in this embodiment may be expressed as:

$$\min_{\beta} g(\beta)$$
$$s.t. \quad \beta \succeq 0 \qquad \text{Formula (11)}$$

The dual function is always a convex function, while a gradient or sub-gradient algorithm may be used to minimize $g(\beta)$ and guarantee convergence to obtain an optimal dual variable $\beta^*$. Therefore, if a closed expression of the dual function $g(\beta)$ is found, the optimal dual variable $\beta^*$ may be obtained, and optimal original variable **p** = $\{p_{i,k,1}, p_{i',k,2}\}$ **t** = $\{t_{i,i',k}\}$ and $\rho$ = $\{\rho_{i,i'}\}$ can be obtained. That is to say, the purpose of calculation of the dual function $g(\beta)$ in this embodiment is to obtain the optimal original variables $\{\mathbf{p}^*, \rho^*, \mathbf{t}^*\}$ of the dual function on the optimal dual variable $\beta^*$.

S410: Initialize a dual variable $\beta$, that is, set an initial value of the dual variable $\beta$. A preset default value may be used as the initial value of the dual variable $\beta$. Alternatively, the initial value of the dual variable $\beta$ may be generated randomly. A specific implementation process for initializing the dual variable $\beta$ is not limited in this embodiment.

S420: Calculate the optimal original variables t*, p* and $\rho$* at a given dual variable, and obtain a dual function based on t*, p* and $\rho$*. The given dual variable is a current value of the dual variable.

A specific implementation process of S420 includes:

1. For a given subcarrier pairing original variable and a given relay selection original variable, optimize the subcarrier power allocation original variable. The given subcarrier pairing original variable and the given relay selection original variable may be set by adopting manners such as initialization or random allocation.

It is set that the subcarrier pairing $(i,i')$ is allocated to the relay node $k$, that is, $\rho_{i,i'} = 1$, and $t_{i,i',k} =1$. In this case, an optimal subcarrier power allocation original variable may be obtained by solving the following Formula (11):

$$\max L_{i,i',k}$$

$$s.t. \quad p_{i,k,1} \geq 0, p_{i',k,2} \geq 0$$

Formula (11)

It may be seen from the foregoing Formula (11) that, $L_{i,i',k}$ is a convex function about $(p_{i,k,1}, p_{i',k,2})$. The optimal subcarrier power allocation original variable obtained by applying the KKT is as shown in the following Formula (12) and Formula (13):

$$p_{i,k,1}^* = \begin{cases} c_{i,i',k} p_{i',k,2}^*, & \text{when } p_{i,k,2}^* > 0 \\ (\dfrac{1}{\beta_S} - \dfrac{1}{\alpha_{i,3}})^+, & \text{when } p_{i',k,2}^* = 0 \end{cases}$$

Formula (12)

$$p_{i',k,2}^* = \begin{cases} \left(\dfrac{\alpha_{i,k,1}\alpha_{i',k,2}^2 + (\alpha_{i,3} - \beta_S)(\alpha_{i,k,1}c_{i,i',k} + \alpha_{i',k,2})^2}{c_{i,i',k}\beta_S(\alpha_{i,k,1}c_{i,i',k} + \alpha_{i',k,2})(\alpha_{i,3}\alpha_{i,k,1}c_{i,i',k} + \alpha_{i,3}\alpha_{i',k,2} + \alpha_{i,k,1}\alpha_{i',k,2})}\right)^+, & \text{if } \alpha_{i',k,2}\beta_S > \alpha_{i,3}\beta_{R,k} \\ 0, & \text{if } \alpha_{i',k,2}\beta_S \leq \alpha_{i,3}\beta_{R,k} \end{cases}$$

Formula (13)

$c_{i,i',k}$ in the foregoing Formula (12) and Formula (13) is as shown in the following Formula (14):

$$c_{i,i',k} = \frac{\alpha_{i',k,2}}{\alpha_{i,k,1}(\alpha_{i',k,2}\beta_S - \alpha_{i,3}\beta_{R,k})}\left(\sqrt{\beta_{R,k}(\alpha_{i,k,1}\alpha_{i',k,2}\beta_S - \alpha_{i,k,1}\alpha_{i,3}\beta_{R,k} + \alpha_{i',k,2}\alpha_{i,3}\beta_S)} + \alpha_{i,3}\beta_{R,k}\right)$$

Formula (14)

2. For a given subcarrier pairing original variable, optimize a relay selection original variable.
The foregoing Formula (12) and Formula (13) are substituted into $L_{i,i',k}$ of the Formula (6) to obtain the Formula (15):

$$g(\beta) = \max_{\rho \in D} \sum_{i=1}^{N} \sum_{i'=1}^{N} \rho_{i,i'} H_{i,i',k} + \beta_S P_S + \sum_{k=1}^{K} \beta_{R,k} P_{R,k}$$

Formula (15)

In the Formula (15), $H_{i,i',k}$ may have the following two types of definitions.
a. Under the circumstances that signal transmission is performed directly between the source node S and the destination node D without using a relay node, $H_{i,i',k}$ is as shown in the following Formula (16):

$$H_{i,i',k} = \left[ \ln(\frac{\alpha_{i,3}}{\beta_S}) \right]^+ - \beta_S \left( \frac{1}{\beta_S} - \frac{1}{\alpha_{i,3}} \right)^+$$

Formula (16)

a. Under the circumstances that signal coordinative transmission is performed between the source node S and the destination node D by using a relay node, $H_{i,i',k}$ is as shown in the following Formula (17):

$$H_{i,i',k} = \ln \left[ \frac{\alpha_{i,3}(\alpha_{i,k,1}c_{i,i',k} + \alpha_{i',k,2})^2 + \alpha_{i,k,1}\alpha_{i',k,2}^2}{\beta_S(\alpha_{i,k,1}c_{i,i',k} + \alpha_{i',k,2})^2} \right]$$
$$-(\beta_S c_{i,i',k} + \beta_{R,k}) \left[ \frac{\alpha_{i,k,1}\alpha_{i',k,2}^2 + (\alpha_{i,3} - \beta_S)(\alpha_{i,k,1}c_{i,i',k} + \alpha_{i',k,2})^2}{c_{i,i',k}\beta_S(\alpha_{i,k,1}c_{i,i',k} + \alpha_{i',k,2})(\alpha_{i,3}\alpha_{i,k,1}c_{i,i',k} + \alpha_{i,3}\alpha_{i',k,2} + \alpha_{i,k,1}\alpha_{i',k,2})} \right]$$

Formula (17)

Based on the Formula (15), with the given subcarrier pairing original variables ρ, the optimal relay selection original variable **t\*** may be obtained.

It is assumed that the given subcarrier pairing (*i,i'*) meets the subcarrier pairing constraint, that is, $\rho_{i,i'}$ = 1. It may be seen from the Formula (15) that, a selected optimal relay node should maximize $H_{i,i',k}$. That is to say, an optimal original variable of the relay selection should enable the Formula (16) and the Formula (17) to obtain a maximum value, which may be expressed by the following Formula (18):

$$t_{i,i',k}^* = \begin{cases} 1, & k = k^*(i,i') = \arg\max H_{i,i',k} \\ 0, & otherwise \end{cases}$$

Formula (18)

It may be known from this that, $H_{i,i',k}$ defined in the Formula (16) or the Formula (17) is an optimum criterion for relay selection. When multiple relay nodes which can maximize $H_{i,i',k}$ exist, a relay node may be randomly selected from the multiple relay nodes for the subcarrier pairing (*i,i'*).

3. Optimize a subcarrier pairing original variable.

The following Formula (19) is obtained by substituting the foregoing Formula (18) into the Formula (15), and the following Formula (19) is a closed expression of *g*(β):

$$g(\beta) = \max_{\rho \in D} \sum_{i=1}^{N} \sum_{i'=1}^{N} \rho_{i,i'} H_{i,i'} + \beta_S P_S + \sum_{k=1}^{K} \beta_{R,k} P_{R,k}$$

Formula (19)

In the foregoing Formula (19), $H_{i,i'} \overset{\Delta}{=} H_{i,i',k^*(i,i')}$, where D is a range of ρ.

An $N \times N$ profit matrix **H** = [$H_{i,i}$] is defined. In order to maximize the Formula (19) in a set *D*, an element may be selected from each row and each column of the profit matrix, so as to make a total profit as great as possible. Apparently, this is a standard linear allocation problem, and the standard linear allocation problem may be solved by using a Hungarian algorithm. That is to say, the Formula (19) may be solved by using the Hungarian algorithm, so as to obtain an optimal subcarrier pairing original variable.

If $\pi(i)$ ($i$ =1,..., $N$) is set to indicate a label of a subcarrier that is in the second-hop subcarriers and paired with the first-hop subcarrier $i$, the optimal subcarrier pairing original variable may be as shown in the following Formula (20):

$$\rho_{i,i'}^{*} = \begin{cases} 1, & i' = \pi(i) \\ 0, & otherwise \end{cases}$$

Formula (20)

A dual function based on the optimal original variables may be obtained by substituting the optimal original variables {**p***, $\rho$*, **t***} into the Formula (6).

S430: Judge whether a current dual variable is converged according to the foregoing obtained dual function based on the optimal original variables and by using a gradient algorithm or sub-gradient algorithm; if a judgment result is that the current dual variable is converged, proceed to S440; otherwise, proceed to S450.

Many existing convergence judgment methods may be adopted to judge whether the dual variable is converged in this embodiment. A specific judgment process of judging whether the current dual variable is converged is not limited in this embodiment.

S440: Modify the optimal subcarrier power allocation original variable by using the optimal subcarrier pairing original variable and optimal relay selection original variable. After that, the optimal subcarrier pairing original variable, optimal relay selection original variable and modified optimal subcarrier power allocation original variable are used to transmit a signal.

Under the circumstances that the number of subcarriers is limited, a duality gap cannot be regarded approximately as zero. Therefore, the optimal subcarrier power allocation original variable may be inaccurate, and needs to be modified. The optimal subcarrier power allocation original variable **p** may be updated by using $t^*(\beta^*)$ and $\rho^*(\beta^*)$, and the updated optimal subcarrier power allocation original variable **p** satisfies a subcarrier power constraint and the source node power constraint that are in the mathematical optimization problem. A specific example of modifying the optimal subcarrier power allocation original variable is: modifying the optimal subcarrier power allocation original variable by using an existing resource allocation method in which only subcarrier power allocation is taken into consideration.

When the number of subcarriers $N$ is large enough, the duality gap gets smaller and smaller, and the optimal subcarrier power allocation original variable without being modified may basically be regarded as an optimal solution. It is not difficult to prove that, if the optimal subcarrier power allocation original variable is modified when the number of subcarriers N is large enough, an expression of the modified optimal subcarrier power allocation original variable is basically the same as the foregoing Formula (12) and Formula (13).

S450: Calculate a sub-gradient of the dual function, and update the current given dual variable by using a calculation result. Proceed to S420.

The sub-gradient of the dual variable may be calculated by using a gradient algorithm or sub-gradient algorithm. A specific implementation manner for calculating the sub-gradient of the dual variable is not limited in this embodiment.

Complexity of updating the dual variable is a polynomial of $K$, namely, $K^{\alpha}$, and complexity of obtaining an optimal original variable of the subcarrier pairing is $O(N^{\beta})$. Therefore, overall complexity of the second embodiment is $O(N^{\beta}K^{\alpha})$.

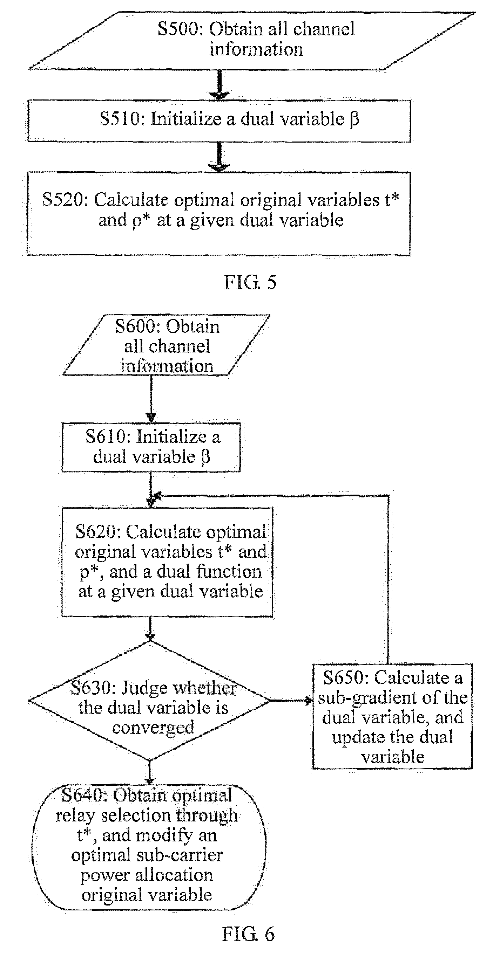

Embodiment 3: resource allocation method. The method is a resource allocation method under the circumstances that power allocated to each subcarrier is equal, namely, a resource allocation method based on equal subcarrier power allocation. A process of the method is as shown in FIG. 5.

In FIG. 5, S500: Obtain actual channel information, that is, obtain channel information of all subcarriers.

The channel information obtained in S500 is an equivalent channel gain of each subcarrier, where the equivalent channel gain of each subcarrier is obtained through channel coefficient calculation. The equivalent channel gain of each subcarrier may include: an equivalent channel gain of a subcarrier i between a source node S and a relay node k, namely, an equivalent channel gain $\alpha_{i,k,1}$ of a first-hop subcarrier i, an equivalent channel gain of a subcarrier i between the relay node k and a destination node D, namely, an equivalent channel gain $\alpha_{i,k,2}$ of a second-hop subcarrier i, and an equivalent channel gain $\alpha_{i,3}$ of a subcarrier i directly connected between the source node S and the destination node D without any relay node.

In this embodiment, all transmit nodes (namely, source node and each relay node) may follow a same independent power constraint, that is, $P_S = P_{R,k} = P, \forall k$.

S510: Initialize a dual variable $\beta$, that is, set an initial value of the dual variable $\beta$. A preset default value may be used as the initial value of the dual variable $\beta$. Alternatively, the initial value of the dual variable $\beta$ may be generated randomly. A specific implementation process for initializing the dual variable $\beta$ is not limited in this embodiment.

S520: Calculate optimal original variables t* and $\rho$* at a given dual variable. The given dual variable is a current value of the dual variable. After that, a signal is transmitted by using the optimal original variables t* and ρ*, and an average value of subcarrier power allocation.

A specific implementation process of S520 includes: optimizing relay selection for a given subcarrier pairing original variable and the calculated and obtained average value of subcarrier power allocation. The calculated and obtained average value of subcarrier power allocation is as shown in the following Formula (21):

$$p_{i,k,1} = \frac{1}{N} P, \; p_{i',k,2} = \frac{K}{N} P$$

Formula (21)

The Formula (21) is substituted into $L_{i,\bar{i},k}$ of the Formula (6). After that, for the given subcarrier pairing original variable ρ, a relay node that maximizes a transmission rate $R_{i,\bar{i},k}$ is selected, namely, calculating an optimal relay selection original variable t*. Then, the optimal relay selection original variable t* is also substituted into $L_{i,\bar{i},k}$ of the Formula (6), and an optimal subcarrier pairing original variable is obtained by using a Hungarian algorithm, thereby obtaining the optimal original variables {ρ*,t*} of the dual function on the current given dual variable.

Convergence judgment does not need to be performed for the dual variable, and further, the current value of the dual variable does not need to be updated. Complexity of the third embodiment is $O(N^3)$.

Embodiment 4: resource allocation method. The method is a resource allocation method under the circumstances that each subcarrier pairing is known, namely, a resource allocation method based on preset fixed subcarrier pairing. A process of the method is as shown in FIG. 6.

In FIG. 6, S600: Obtain actual channel information, that is, obtain channel information of all subcarriers.

The channel information obtained in S600 is an equivalent channel gain of each subcarrier, where the equivalent channel gain of each subcarrier is obtained through channel coefficient calculation. The equivalent channel gain of each subcarrier may include: an equivalent channel gain of a subcarrier i between a source node S and a relay node k, namely, an equivalent channel gain $\alpha_{i,k,1}$ of a first-hop subcarrier i, an equivalent channel gain of a subcarrier i between the relay node k and a destination node D, namely, an equivalent channel gain $\alpha_{i,k,2}$ of a second-hop subcarrier i, and an equivalent channel gain $\alpha_{i,3}$ of a subcarrier i directly connected between the source node S and the destination node D without any relay node.

It is set that a preset fixed subcarrier pairing scheme is π(i) = i, ∀i, that is, a signal sent by the source node on a subcarrier is forwarded by the relay node to the destination node on the same subcarrier.

S610: Initialize a dual variable β, that is, set an initial value of the dual variable β. A preset default value may be used as the initial value of the dual variable β. Alternatively, the initial value of the dual variable β may be generated randomly. A specific implementation process for initializing the dual variable β is not limited in this embodiment.

S620: Calculate optimal original variables t* and p* at a given dual variable, and obtain a dual function based on t*, p* and π(i) = i, ∀i. The given dual variable is a current value of the dual variable.

A specific implementation process of S620 includes:

1. For π(i) = i, ∀i , and a given relay selection original variable, optimize subcarrier power allocation, that is, obtain an optimal subcarrier power allocation original variable.

It is set that π(i) = i, ∀i, is allocated to the relay node k, that is, $ρ_{i,i}$ = 1, and $t_{i,i,k}$ = 1. In this case, the optimal subcarrier power allocation original variable may be obtained max $L_{i,i,k}$ by solving s.t. $p_{i,k,1} ≥ 0$, $p_{i,k,2} ≥ 0$.

2. For π(i) = i, ∀i, optimize relay selection, that is, obtain an optimal relay selection original variable.

The foregoing optimal subcarrier power allocation original variable and π(i) = i, ∀i, are substituted into $L_{i,\bar{i},k}$ of the Formula (6), and the optimal relay selection original variable t* is calculated based on the Formula (6) after substitution. A relay node selection algorithm may be expressed as k(i,i) = arg max$_k$ $H_{i,i,k}$, ∀i.

A dual function based on the optimal subcarrier power allocation original variable, optimal relay selection original variable and given subcarrier pairing may be obtained by substituting π(i) = i, ∀i, and the optimal original variables {p*, t*} into the Formula (6).

S630: According to the foregoing obtained dual function based on the optimal subcarrier power allocation original variable, optimal relay selection original variable and given subcarrier pairing, judge whether the current given dual variable is converged by using a gradient algorithm or sub-gradient algorithm; if a judgment result is that the current given dual variable is converged, proceed to S640; otherwise, proceed to S650.

Many existing convergence judgment methods may be adopted to judge whether the dual variable is converged in this embodiment. A specific judgment process of judging whether the current given dual variable is converged is not limited in this embodiment.

S640: Modify the optimal subcarrier power allocation original variable by using π(i) = i, ∀i, and the optimal relay selection original variable. A specific implementation process for modifying the optimal subcarrier power allocation original variable is not limited in this embodiment. After that, a signal is transmitted by using $\pi(i) = i, \forall i$, optimal relay selection original variable and the modified optimal subcarrier power allocation original variable.

S650: Calculate a sub-gradient of the dual function, and update the current given dual variable by using a calculation result. Proceed to S620.

The sub-gradient of the dual variable may be calculated by using the gradient algorithm or sub-gradient algorithm. A specific implementation manner for calculating the sub-gradient of the dual variable is not limited in this embodiment.

$K^\alpha$ steps are required for updating the dual variable in the fourth embodiment, and complexity of relay selection and power allocation in each step is $O(NK)$. Therefore, overall complexity of the fourth embodiment is $O(NK^{\alpha+1})$.

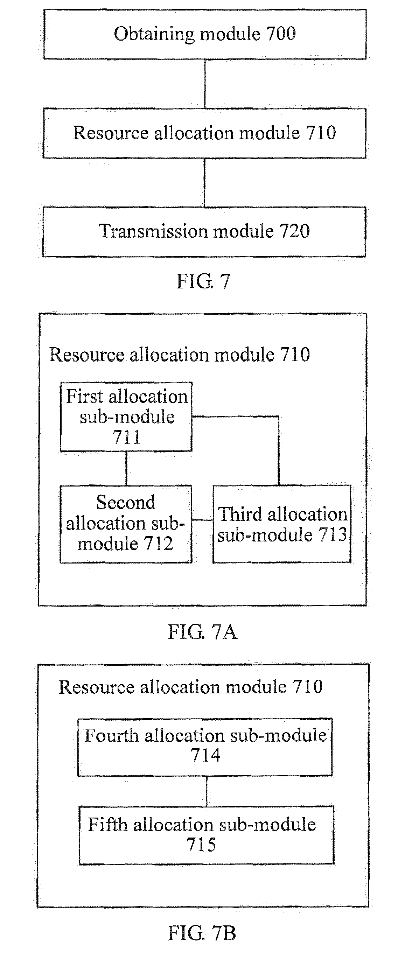

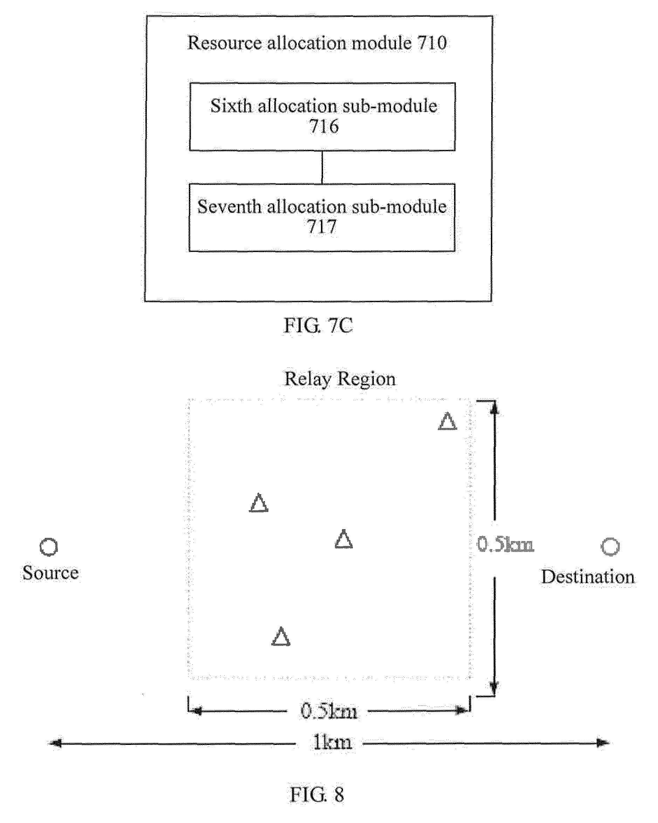

Embodiment 5: resource allocation apparatus. A structure of the apparatus is as shown in FIG. 7. The resource allocation apparatus in FIG. 7 may be a source node in a multi-relay orthogonal frequency division multiplexing system, and may also be a relay node in the multi-relay orthogonal frequency division multiplexing system. The apparatus in FIG. 7 includes an obtaining module 700, a resource allocation module 710 and a transmission module 720.

The obtaining module 700 is configured to obtain actual channel information. Here, the actual channel information may be an equivalent channel gain of each subcarrier.

A specific example of the obtaining, by the obtaining module 700, the actual channel information may be: first obtaining, by the obtaining module 700, a channel coefficient of each subcarrier, and then calculating, by the obtaining module 700, the equivalent channel gain of each subcarrier by using the channel coefficient of each subcarrier.

The resource allocation module 710 is configured to obtain resource allocation parameters according to a mathematical optimization problem based on the actual channel information. Here, the resource allocation parameters include at least two of subcarrier power allocation, relay selection and subcarrier pairing. Here, the mathematical optimization problem is a mathematical optimization problem set for the subcarrier power allocation, relay selection and subcarrier pairing by using an end-to-end transmission rate optimization principle and based on channel information. The end-to-end transmission rate optimization principle may be specifically an end-to-end transmission rate maximization principle. In the following embodiments, that the end-to-end transmission rate optimization principle is specifically the end-to-end transmission rate maximization principle is mainly taken as an example to illustrate the resource allocation apparatus.

Because the mathematical optimization problem is set for the subcarrier power allocation, relay selection and subcarrier pairing, the resource allocation module 710 may obtain at least two of the subcarrier power allocation, relay selection and subcarrier pairing that maximize an end-to-end transmission rate from a solution result.

The resource allocation module 710 may solve the foregoing mathematical optimization problem by adopting a form of a dual function, and may also solve the mathematical optimization problem by adopting other methods. The resource allocation module 710 may store the mathematical optimization problem, and may also store a dual function converted from the mathematical optimization problem. A specific implementation process for solving the mathematical optimization problem by the resource allocation module 710 is not limited in this embodiment. The mathematical optimization problem, dual function and so on in this embodiment are as described in the foregoing first embodiment to the fourth embodiment, and are not repeatedly described in detail here.

A specific example of solving the dual function by the resource allocation module 710 may be: first determining, by the resource allocation module 710, a value of a dual variable of the dual function; then, calculating, by the resource allocation module 710, an optimal original variable of the dual function on the dual variable. The optimal original variable obtained by the resource allocation module 710 is a result of solving the mathematical optimization problem. Here, the value of the dual variable may be an optimal value of the dual variable, namely, an optimal dual variable, and may also be an initial value of the dual variable. The initial value of the dual variable is a value for initializing the dual variable.

After obtaining the optimal original variable, the resource allocation module 710 may transmit a signal according to the optimal original variable.

A specific example of a structure of the resource allocation module 710 is as shown in FIG. 7A. The resource allocation module 710 in FIG. 7A includes: a first allocation sub-module 711, a second allocation sub-module 712 and a third allocation sub-module 713. Optionally, the resource allocation apparatus may further include any one or two of a first convergence module and a first modification module.

The first allocation sub-module 711 is configured to obtain optimal subcarrier power allocation from the mathematical optimization problem based on the actual channel information under the circumstances of given subcarrier pairing and given relay selection. The first allocation sub-module 711 may set the given subcarrier pairing and given relay selection by adopting manners such as initialization or random allocation. A specific manner for setting, by the first allocation sub-module 711, the given subcarrier pairing and given relay selection is not limited in this embodiment.

The second allocation sub-module 712 is configured to obtain optimal relay selection from the mathematical optimization problem based on the actual channel information under the circumstances of the given subcarrier pairing and the optimal subcarrier power allocation that is obtained by the first allocation sub-module 711.

The third allocation sub-module 713 is configured to obtain optimal subcarrier pairing from the mathematical optimization problem based on the actual channel information under the circumstances of the optimal subcarrier power allocation obtained by the first allocation sub-module 711 and the optimal relay selection obtained by the second allocation sub-module 712.

When the mathematical optimization problem is expressed in the form of a dual function, the optimal subcarrier pairing, optimal relay selection and optimal subcarrier power allocation that are obtained by the first allocation sub-module 711, second allocation sub-module 712 and third allocation sub-module 713 are optimal original variables of the dual function on a current value of the dual variable. The current value of the dual variable may be an initialized value of the dual variable, and may also be an optimal dual variable.

After the first allocation sub-module 711, second allocation sub-module 712 and third allocation sub-module 713 obtain the optimal original variables by using the initialized value of the dual variable, the first convergence module in the resource allocation apparatus needs to judge whether a dual variable in a dual function based on the foregoing optimal subcarrier pairing, optimal relay selection and optimal subcarrier power allocation is converged; if not converged, the first convergence module updates the dual variable. For example, the first convergence module updates the dual variable according to a gradient algorithm or a sub-gradient algorithm, and then, the first allocation sub-module 711, second allocation sub-module 712 and third allocation sub-module 713 reobtain the optimal subcarrier pairing, optimal relay selection and optimal subcarrier power allocation based on the updated dual variable, until the first convergence module judges that the dual variable is converged. That is to say, when the first convergence module judges that the dual variable is converged, the optimal original variables currently obtained by the first allocation sub-module 711, second allocation sub-module 712 and third allocation sub-module 713 are a solution to the mathematical optimization problem. The converged dual variable is the optimal dual variable of the dual function.

In addition, after the first convergence module judges that the dual variable is converged, the first modification module in the resource allocation apparatus may modify the optimal subcarrier power allocation by using the optimal subcarrier pairing and the optimal relay selection, so that the subcarrier power allocation is more accurate. A specific example for performing operations by the first allocation sub-module 711, second allocation sub-module 712, third allocation sub-module 713, first convergence module and first modification module is as described in the foregoing second embodiment, and is not repeatedly described here.

A second specific example of the structure of the resource allocation module 710 is as shown in FIG. 7B. The resource allocation module 710 in FIG. 7B includes a fourth allocation sub-module 714 and a fifth allocation sub-module 715.

The fourth allocation sub-module 714 is configured to obtain optimal relay selection from the mathematical optimization problem based on the actual channel information under the circumstances of given subcarrier pairing and equal subcarrier power allocation. The equal subcarrier power allocation is that, for a sending node, power of each subcarrier is the same. The fourth allocation sub-module 714 may set the given subcarrier pairing by adopting manners such as initialization or random allocation. A specific implementation manner for setting, by the fourth allocation sub-module 714, the given subcarrier pairing is not limited in this embodiment.

When the mathematical optimization problem is expressed in the form of a dual function, the fourth allocation sub-module 714 may further initialize a dual variable $\beta$. The fourth allocation sub-module 714 may use a preset default value as an initial value of the dual variable $\beta$, and may also generate the initial value of the dual variable $\beta$ randomly. A specific implementation process for initializing, by the fourth allocation sub-module 714, the dual variable $\beta$ is not limited in this embodiment.

The fifth allocation sub-module 715 is configured to obtain optimal subcarrier pairing from the mathematical optimization problem based on the actual channel information under the circumstances of equal subcarrier power allocation and the optimal relay selection that is obtained by the fourth allocation sub-module 714.

When the mathematical optimization problem is expressed in the form of a dual function, the optimal relay selection and optimal subcarrier pairing that are obtained by the fourth allocation sub-module 714 and fifth allocation sub-module 715 may be obtained based on the initialized value of the dual variable $\beta$. A specific example for performing operations by the fourth allocation sub-module 714 and fifth allocation sub-module 715 is as described in the foregoing third embodiment, and is not repeatedly described here.

A third specific example of the structure of the resource allocation module 710 is as shown in FIG. 7C. The resource allocation module 710 in FIG. 7C includes a sixth allocation sub-module 716 and a seventh allocation sub-module 715. Optionally, the resource allocation apparatus may further include any one or two of a second convergence module and a second modification module.

The sixth allocation sub-module 716 is configured to obtain optimal subcarrier power allocation from the mathematical optimization problem based on the actual channel information under the circumstances of known subcarrier pairing and given relay selection. The sixth allocation sub-module 716 may set the given relay selection by adopting manners such as initialization or random allocation. A specific manner for setting, by the sixth allocation sub-module 716, the given relay selection is not limited in this embodiment.

The seventh allocation sub-module 717 is configured to obtain optimal relay selection from the mathematical optimization problem based on the actual channel information under the circumstances of known subcarrier pairing and the optimal subcarrier power allocation that is obtained by the sixth allocation sub-module.

When the mathematical optimization problem is expressed in the form of a dual function, the optimal relay selection and optimal subcarrier power allocation that are obtained by the sixth allocation sub-module 716 and seventh allocation sub-module 717 are the optimal original variables of the dual function on a current value of the dual variable. The current value of the dual variable may be an initialized value of the dual variable, and may also be an optimal dual variable.

After the sixth allocation sub-module 716 and seventh allocation sub-module 717 obtain the optimal original variables by using the initialized value of the dual variable, the second convergence module in the resource allocation apparatus needs to judge whether a dual variable of a dual function based on the foregoing known subcarrier pairing, optimal relay selection and optimal subcarrier power allocation is converged; if not converged, the second convergence module updates the dual variable. For example, the second convergence module updates the dual variable according to a gradient algorithm or a sub-gradient algorithm, and then, the sixth allocation sub-module 716 and seventh allocation sub-module 717 reobtain the optimal relay selection and optimal subcarrier power allocation based on the updated dual variable, until the second convergence module judges that the dual variable is converged. That is to say, when the second convergence module judges that the dual variable is converged, the optimal original variables currently obtained by the sixth allocation sub-module 716 and seventh allocation sub-module 717 are a solution to the mathematical optimization problem. The converged dual variable is the optimal dual variable of the dual function.

In addition, after the second convergence module judges that the dual variable is converged, the second modification module in the resource allocation apparatus may modify the optimal subcarrier power allocation by using the known subcarrier pairing and the optimal relay selection, so that the subcarrier power allocation is more accurate. A specific example for performing operations by the sixth allocation sub-module 716, seventh allocation sub-module 717, second convergence module and second modification module is as described in the foregoing fourth embodiment, and is not repeatedly described here.

The transmission module 720 is configured to transmit a signal according to the resource allocation parameters obtained by the resource allocation module 710. The transmission module 720 may implement signal transmission by using the foregoing resource allocation parameters and adopting an existing signal transmission operation. A specific implementation process for transmitting, by the transmission module 720, a signal is not limited in this embodiment.

System performance in the embodiments of the present invention is described in the following with reference to a simulation result.

It is set that a two-hop OFDM system based on AF includes: a source node, a destination node and four relay nodes, that is, $K = 4$, where distribution of the four relay nodes is as shown in FIG. 8. The four relay nodes in FIG. 8 are randomly distributed in a square region. A Stanford University Interim (SUI) channel model with a center frequency at 1.9 GHz is adopted as a channel model. Assume that each sending node has a same independent power constraint, and noise power is normalized to 1. A total bandwidth of channels is fixed at 1 MHz. It is set that a path loss factor is 3.5, and a shadow effect is not taken into consideration. It is set that the number of subcarriers is 16, that is, $N = 16$, and all subcarriers undergo flat fading.

In order to provide a comparison reference, system performance of a relay selection (for example, selecting a relay node which can maximize an average channel gain on an entire channel bandwidth) reference scheme based on OFDM symbols is shown. The reference scheme includes: (1) For each relay node, sequencing subcarriers at each hop respectively according to a channel gain; (2) Pairing subcarriers on two tops one by one according to the sequence, where existing documents have proved that such a sequencing and pairing manner is optimal in a single-relay system, and calculating a total transmission rate corresponding to each relay under the assumption of equal power allocation; and (3) Selecting a relay node which can maximize a transmission rate, and performing optimal power allocation on each subcarrier pair.

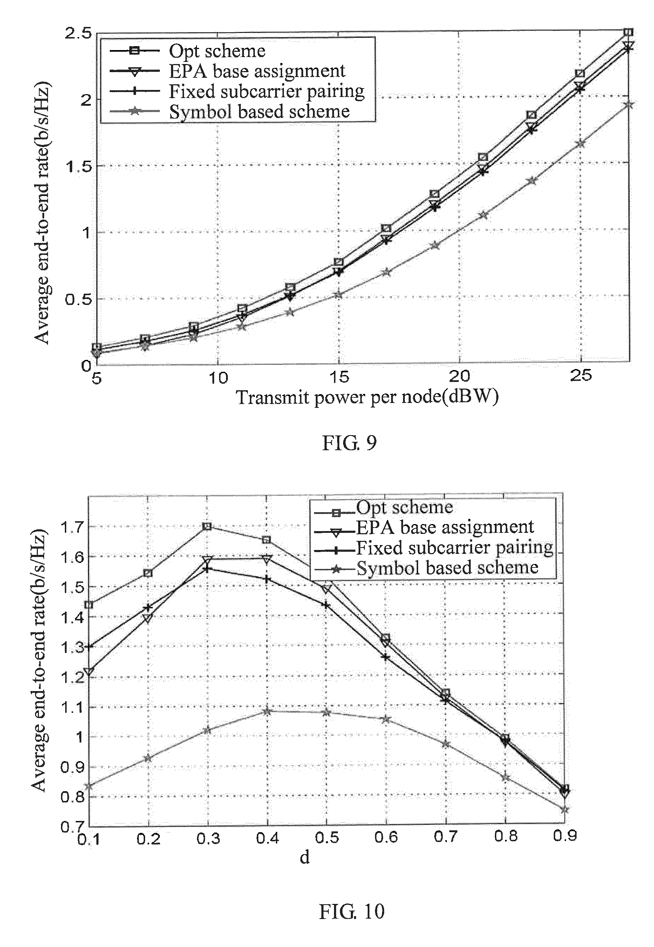

At different sending power of sending nodes, average system performance of 100 kinds of random relay node distribution is as shown in FIG. 9.

In FIG. 9, an abscissa is sending power of the sending nodes, and an ordinate is an average value of an end-to-end transmission rate. A curve with blocks is a system performance curve of the second embodiment of the present invention. A curve with triangles is a system performance curve of the third embodiment of the present invention. A curve with vertical bars is a system performance curve of the fourth embodiment of the present invention. A curve with pentagrams is a system performance curve of the relay selection reference scheme based on OFDM symbols. It may be known from the curves shown in FIG. 9 that, the system performance in the second embodiment, the system performance in the third embodiment and the system performance in the fourth embodiment of the present invention are apparently superior to system performance in the reference scheme. Especially, when power of each sending node is 20 dBW, end-to-end frequency spectrum efficiency of the second embodiment of the present invention may be improved by about 40%. It may be known from comparing the system performance in the third embodiment and the fourth embodiment of the present invention with the system performance in the second embodiment that, according to the foregoing third embodiment and fourth embodiment, only power loss of less than 1 dB is brought.

It may also be known from the system performance curves shown in FIG. 9 that, in a region of a high signal-to-noise ratio, the system performance in the third embodiment of the present invention is slightly better than the system performance in the fourth embodiment of the present invention.

It is set that four relay nodes in a network form a relay node cluster distributed on a connection line between a source node and a destination node. A radius of the relay cluster is far less than a distance between the source node and the destination node. A variable $d$ on a horizontal coordinate of FIG. 10 indicates a ratio of a distance between the source node and relay to a distance between the source node and the destination node. A vertical coordinate is an average value of an end-to-end transmission rate. An average end-to-end transmission rate that changes with a change of a relay node location is as shown in FIG. 10.

In FIG. 10, a curve with blocks is a system performance curve of the second embodiment of the present invention. A curve with triangles is a system performance curve of the third embodiment of the present invention. A curve with vertical bars is a system performance curve of the fourth embodiment of the present invention. A curve with pentagrams is a system performance curve of the relay selection reference scheme based on OFDM symbols. It may be seen from the curve with blocks that, for the second embodiment of the present invention, a system transmission rate is maximum when $d = 0.3$, which is 70% higher than an end-to-end transmission rate in the reference scheme.

It may also be seen from the curves shown in FIG. 10 that, when $d \geq 0.3$, an end-to-end transmission rate in the third embodiment of the present invention is superior to an end-to-end transmission rate in the fourth embodiment of the present invention.

Through the description of the preceding embodiments, persons skilled in the art may clearly understand that the present invention may be implemented by software plus a necessary hardware platform, and definitely may also be implemented by hardware, but in most cases, the former is a preferred implementation manner. Based on such understanding, part of or all of the technical solutions of the present invention that makes contributions to the prior art may be embodied in a form of a software product. The software product may be used to execute the foregoing method process. The computer software product may be stored in a readable storage medium, for example, a ROM/RAM, a magnetic disk, or an optical disk, and includes several instructions used to instruct a computer device (for example, a personal computer, a server, or a network device, and so on) to execute the method described in the embodiments of the present invention or a certain part of the embodiments.

Although the present invention is described through embodiments, persons of ordinary skill in the art should know that, a lot of variations and changes of the present invention without departing from the spirit of the present invention should be covered by the claims of the application document of the present invention.

## Claims

1. A resource allocation method of a multi-relay orthogonal frequency division multiplexing system, comprising:

    obtaining actual channel information;
    obtaining resource allocation parameters according to a mathematical optimization problem based on the actual channel information, wherein the resource allocation parameters comprises at least two of subcarrier power allocation, relay selection and subcarrier pairing,
    wherein the mathematical optimization problem is a mathematical optimization problem set for the subcarrier power allocation, relay selection and subcarrier pairing by using an end-to-end transmission rate optimization principle and based on channel information; and
    transmitting a signal according to the resource allocation parameters.

2. The method according to claim 1, wherein the obtaining the resource allocation parameters according to the mathematical optimization problem based on the actual channel information comprises:

    under the circumstances of given subcarrier pairing and given relay selection, obtaining optimal subcarrier power allocation from the mathematical optimization problem based on the actual channel information;
    under the circumstances of the given subcarrier pairing and the optimal subcarrier power allocation, obtaining optimal relay selection from the mathematical optimization problem based on the actual channel information; and
    under the circumstances of the optimal subcarrier power allocation and the optimal relay selection, obtaining optimal subcarrier pairing from the mathematical optimization problem based on the actual channel information.

3. The method according to claim 2, wherein when the mathematical optimization problem is expressed in a form of a dual function, the optimal subcarrier pairing, optimal relay selection and optimal subcarrier power allocation are obtained based on an initialized dual variable of the dual function or an optimal dual variable of the dual function; and when obtaining the optimal subcarrier pairing, optimal relay selection and optimal subcarrier power allocation based on the initialized dual variable of the dual function, the method further comprises:

> judging whether a dual variable of a dual function based on the optimal subcarrier pairing, optimal relay selection and optimal subcarrier power allocation is converged; and
> if the dual variable is not converged, updating the dual variable, and reobtaining the optimal subcarrier pairing, optimal relay selection and optimal subcarrier power allocation by using the updated dual variable, until the dual variable is converged.

4.  The method according to claim 3, wherein after the dual variable is converged, the method further comprises:

> modifying the optimal subcarrier power allocation by using the optimal relay selection and optimal subcarrier pairing.

5.  The method according to claim 1, wherein the obtaining the resource allocation parameters according to the mathematical optimization problem based on the actual channel information comprises:

> under the circumstances of given subcarrier pairing and equal subcarrier power allocation, obtaining optimal relay selection from the mathematical optimization problem based on the actual channel information; and
> under the circumstances of the equal subcarrier power allocation and the optimal relay selection, obtaining optimal subcarrier pairing from the mathematical optimization problem based on the actual channel information.

6.  The method according to claim 5, wherein when the mathematical optimization problem is expressed in a form of a dual function, the optimal subcarrier pairing and optimal relay selection are obtained based on an initialized dual variable of the dual function.

7.  The method according to claim 1, wherein the obtaining the resource allocation parameters according to the mathematical optimization problem based on the actual channel information comprises:

> under the circumstances of known subcarrier pairing and given relay selection, obtaining optimal subcarrier power allocation from the mathematical optimization problem based on the actual channel information; and
> under the circumstances of the known subcarrier pairing and the optimal subcarrier power allocation, obtaining optimal relay selection from the mathematical optimization problem based on the actual channel information.

8.  The method according to claim 7, wherein when the mathematical optimization problem is expressed in a form of a dual function, the optimal relay selection and optimal subcarrier power allocation are obtained based on an initialized dual variable of the dual function or an optimal dual variable of the dual function; and when obtaining the optimal relay selection and optimal subcarrier power allocation based on the initialized dual variable of the dual function, the method further comprises:

> judging whether a dual variable of a dual function based on the known subcarrier pairing, optimal relay selection and optimal subcarrier power allocation is converged; and
> if the dual variable is not converged, updating the dual variable, and reobtaining the optimal relay selection and optimal subcarrier power allocation by using the updated dual variable, until the dual variable is converged.

9.  The method according to claim 8, wherein after the dual variable is converged, the method further comprises:

> modifying the optimal subcarrier power allocation by using the optimal relay selection and the known subcarrier pairing.

10. A resource allocation apparatus, comprising:

> an obtaining module, configured to obtain actual channel information;
> a resource allocation module, configured to obtain resource allocation parameters according to a mathematical optimization problem based on the actual channel information, wherein the resource allocation parameters comprise at least two of subcarrier power allocation, relay selection and subcarrier pairing,
> wherein the mathematical optimization problem is a mathematical optimization problem set for the subcarrier power allocation, relay selection and subcarrier pairing by using an end-to-end transmission rate optimization principle and based on channel information; and

a transmission module, configured to transmit a signal according to the resource allocation parameters.

**11.** The apparatus according to claim 10, wherein the resource allocation module comprises:

a first allocation sub-module, configured to obtain optimal subcarrier power allocation from the mathematical optimization problem based on the actual channel information under the circumstances of given subcarrier pairing and given relay selection;

a second allocation sub-module, configured to obtain optimal relay selection from the mathematical optimization problem based on the actual channel information under the circumstances of the given subcarrier pairing and the optimal subcarrier power allocation; and

a third allocation sub-module, configured to obtain optimal subcarrier pairing from the mathematical optimization problem based on the actual channel information under the circumstances of the optimal subcarrier power allocation and the optimal relay selection.

**12.** The apparatus according to claim 11, wherein when the mathematical optimization problem is expressed in a form of a dual function, the optimal subcarrier pairing, optimal relay selection and optimal subcarrier power allocation are obtained based on an initialized dual variable of the dual function or an optimal dual variable of the dual function; and when obtaining the optimal subcarrier pairing, optimal relay selection and optimal subcarrier power allocation based on the initialized dual variable of the dual function, the apparatus further comprises:

a first convergence module, configured to judge whether a dual variable of a dual function based on the optimal subcarrier pairing, optimal relay selection and optimal subcarrier power allocation is converged; if the dual variable is not converged, update the dual variable, and notify the first allocation sub-module, second allocation sub-module and third allocation sub-module of reobtaining the optimal subcarrier pairing, optimal relay selection and optimal subcarrier power allocation by using the updated dual variable, until the dual variable is converged.

**13.** The apparatus according to claim 12, further comprising:

a first modification module, configured to modify the optimal subcarrier power allocation by using the optimal relay selection and optimal subcarrier pairing after the dual variable is converged.

**14.** The apparatus according to claim 10, wherein the resource allocation module comprises:

a fourth allocation sub-module, configured to obtain optimal relay selection from the mathematical optimization problem based on the actual channel information under the circumstances of given subcarrier pairing and equal subcarrier power allocation; and

a fifth allocation sub-module, configured to obtain optimal subcarrier pairing from the mathematical optimization problem based on the actual channel information under the circumstances of the equal subcarrier power allocation and the optimal relay selection.

**15.** The apparatus according to claim 10, wherein the resource allocation module comprises:

a sixth allocation sub-module, configured to obtain optimal subcarrier power allocation from the mathematical optimization problem based on the actual channel information under the circumstances of known subcarrier pairing and given relay selection; and

a seventh allocation sub-module, configured to obtain optimal relay selection from the mathematical optimization problem based on the actual channel information under the circumstances of the known subcarrier pairing and the optimal subcarrier power allocation.

**16.** The apparatus according to claim 15, wherein when the mathematical optimization problem is expressed in a form of a dual function, the optimal relay selection and optimal subcarrier power allocation are obtained based on an initialized dual variable of the dual function or an optimal dual variable of the dual function; and when obtaining the optimal relay selection and optimal subcarrier power allocation based on the initialized dual variable of the dual function, the apparatus further comprises:

a second convergence module, configured to judge whether a dual variable of a dual function based on the known subcarrier pairing, optimal relay selection and optimal subcarrier power allocation is converged; if the dual variable is not converged, update the dual variable, and reobtain the optimal relay selection and optimal subcarrier power allocation by using the updated dual variable, until the dual variable is converged.

17. The apparatus according to claim 16, further comprising:

a second modification module, configured to modify the optimal subcarrier power allocation by using the optimal relay selection and the known subcarrier pairing after the dual variable is converged.

FIG. 1

S200: Obtain actual channel information

S210: Obtain resource allocation parameters according to a mathematical optimization problem based on the actual channel information

S220: Transmit a signal

FIG. 2

FIG. 3

S400: Obtain
all channel
information

↓

S410: Initialize a dual
variable β

↓

S420: Calculate optimal original
variables t*, p* and ρ*, and a
dual function at a given dual
variable

↓

S430: Judge whether
the dual variable is
converged

→ S450: Calculate a
sub-gradient of the
dual variable, and
update the dual
variable

↓

S440: Obtain optimal relay
selection and sub-carrier
pairing through t* and ρ*,
and modify sub-carrier
power allocation

FIG. 4

S500: Obtain all channel information

↓

S510: Initialize a dual variable β

↓

S520: Calculate optimal original variables t* and ρ* at a given dual variable

FIG. 5

S600: Obtain all channel information

↓

S610: Initialize a dual variable β

↓

S620: Calculate optimal original variables t* and p*, and a dual function at a given dual variable

↓

S630: Judge whether the dual variable is converged

S650: Calculate a sub-gradient of the dual variable, and update the dual variable

S640: Obtain optimal relay selection through t*, and modify an optimal sub-carrier power allocation original variable

FIG. 6

Obtaining module 700

Resource allocation module 710

Transmission module 720

FIG. 7

Resource allocation module 710

First allocation sub-module 711

Second allocation sub-module 712

Third allocation sub-module 713

FIG. 7A

Resource allocation module 710

Fourth allocation sub-module 714

Fifth allocation sub-module 715

FIG. 7B

Resource allocation module 710

Sixth allocation sub-module
716

Seventh allocation sub-module
717

FIG. 7C

Relay Region

Source

Destination

0.5km

0.5km

1km

FIG. 8

FIG. 9

FIG. 10

# INTERNATIONAL SEARCH REPORT

| International application No. |
|---|
| PCT/CN2010/078365 |

**A. CLASSIFICATION OF SUBJECT MATTER**

Seeing extra sheet

According to International Patent Classification (IPC) or to both national classification and IPC

**B. FIELDS SEARCHED**

Minimum documentation searched (classification system followed by classification symbols)

IPC：H04L;H04W;H04Q;H04B

Documentation searched other than minimum documentation to the extent that such documents are included in the fields searched

Electronic data base consulted during the international search (name of data base and, where practicable, search terms used)

WPI: EPODOC; CNPAT;CNKI: resource, allocat+,distribut+, relay, carrier, rate, speed, channel, power, manag+

**C. DOCUMENTS CONSIDERED TO BE RELEVANT**

| Category* | Citation of document, with indication, where appropriate, of the relevant passages | Relevant to claim No. |
|---|---|---|
| X | Wutong et al."The performance optimization for non-regenerative OFDM relaying system based on two-hop subcarrier pairing strategy" 《Journal of Electronics & Information Technology》,30 Nov.2008（30.11.2008）, Vol. 30 No.11 sections 2-4 | 1-17 |
| A | CN101568073A（UNIV. CHINESE SCI.&TECHNOLOGY）28 Oct.2009（28.10.2009）all the document | 1-17 |
| A | CN101483911A（UNIV. QINGHUA） 15 Jul.2009（15.07.2009）all the document | 1-17 |
| A | CN101494863A(NTT DOCOMO INC.) 29 Jul.2009（29.07.2009）all the document | 1-17 |
| A | US2009 / 0232074A1（NEC LABORATORIES AMERICA, INC.）17 Sep.2009（17.09.2009）all the document | 1-17 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 Nov.2010（30.11.2010） | **30 Dec. 2010 (30.12.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>SONG, Limei<br>Telephone No. (86-10)62413326 |

Form PCT/ISA /210 (second sheet) (July 2009)

## INTERNATIONAL SEARCH REPORT
Information on patent family members

| | International application No. |
|---|---|
| | PCT/CN2010/078365 |

| Patent Documents referred in the Report | Publication Date | Patent Family | Publication Date |
|---|---|---|---|
| CN101568073A | 28.10.2009 | NONE | |
| CN101483911A | 15.07.2009 | NONE | |
| CN101494863A | 29.07.2009 | JP2009177810A | 06.08.2009 |
| US2009 / 0232074A1 | 17.09.2009 | NONE | |

Form PCT/ISA /210 (patent family annex) (July 2009)

## INTERNATIONAL SEARCH REPORT

International application No.

PCT/CN2010/078365

CONTINUATION OF CLASSIFICATION OF SUBJECT MATTER

H04W72 / 04 （2009.01） i
H04L27 / 26 （2006.01） i

Form PCT/ISA /210 (extra sheet) (July 2009)